# NOUVEAU FASCICULE DE BREVET EUROPEEN

(11) **EP 0 146 454 B2**
(45) Date de publication et mention de la décision concernant l'opposition: **29.06.1994**
(45) Mention de la délivrance du brevet: 04.03.1987
(21) Numéro de dépôt: 84402457.0
(22) Date de dépôt: 30.11.1984
(51) Int. Cl.: B62M 3/08

(54) **Dispositif de fixation d'une chaussure sur une pédale de bicyclette**
Vorrichtung zum Festklemmen eines Schuhes an einem Fahrradpedal
Device for attaching a cyclist's shoe to a bicycle pedal

(30) Priorité: 16.12.1983 FR 8320185
(43) Date de publication de la demande: 26.06.1985
(73) Titulaire: Sté. Look Société Anonyme, 58004 Nevers Cedex (FR)
(72) Inventeur: Bernard, Jean, Scionzier F-74300 Cluses (FR); Mercier, Michel, F-58640 Varennes Vauzelles (FR)
(74) Mandataire: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Documents cités:
- EP-A- 0 058 438
- EP-A- 0 098 329
- WO-A-80/01056
- DE-A- 2 312 268
- DE-A- 3 149 345
- FR-A- 2 279 607
- FR-A- 2 394 263
- FR-A- 2 442 175
- FR-A- 2 518 041

## Description

La presente invention a pour objet un dispositif de fixation d'une chaussure sur une pédale de bicyclette.

Divers dispositifs de ce type ont déjà été propo- sés, en particulier dans des brevets, qui permettent d'une part une mise en place facile (sans intervention manuelle) de la chaussure sur la pédale, d'autre part un dégagement rapide de la chaussure soitvolontaire (lorsque le cycliste souhaite poser pied a terre) soit automatique (à la suite d'une chute).

Le brevet FR-2 442175 concerne un dispositif de ce genre, dans lequel la pédale est équipée de moyens d'accrochage adaptés pour cooperer avec une platine monté sous la semelle de la chaussure afin de maintenir cette dernière appliquée sur la pédale. Ces moyens d'accrochage comprennent des moyens avant fixes et des moyens arrière mobiles, sollicités par un système élastique dans leur position d'accrochage.

La mise en place de la chaussure sur la pédale s'opère en deux etapes : un mouvement d'approche d'arrière en avant qui amène la platine en butée contre les moyens d'accrochage avant et un mouvement du talon vers le bas par lequel la platine vient s'encliqueter dans les moyens d'accrochage arrière. Le dégagement volontaire est realise par une torsion latérale du pied qui provoque I'ouverture des moyens d'accrochage arrière.

Ce dispositif est très satisfaisant sur le plan de son fonctionnement car, comme l'ont prouvé des es- sais pratiques realises sur prototypes la mise en place de la chaussure sur la pédale et son dégagement sont deux operations extrêmement faci les, rapides et naturelles.

Dans les formes de realisation des figures 23 a 25 et 26 du brevet précité, les moyens d'accrochage arrière mobiles sont constitués par un levier unique articulé autour d'un axe horizontal transversal (parallèle a I'axe de rotation de la pédale) et sollicité par un ressort dispose longitudinalement. Le levier articulé est pourvu soit d'une paire de griffes, soit d'une griffe unique, qui coopèrent avec la platine par l'intermé- diaire de surfaces qui, en vue de dessus, forment un V. Ainsi, par effet de coin, le déplacement lateral de la platine commande le pivotement vers l'arrière du levier d'accrochage et par conséquent la liberation de la chaussure.

Cette dernière construction est particulièrement avantageuse en raison de son extreme simplicité et de son faible prix de revient qui sont des elements es- sentiels pour une fabrication de grande série et une large diffusion. Par ailleurs la disposition transversale de I'axe de pivotement du levier assure un escamo- tage franc et sur de la griffe (ou des griffes) d'accro- chage permettant une liberation instantanée de la chaussure lors de son dégagement latéral. Cette construction presente toutefois le grave inconvenient suivant : au cours du pédalage, les efforts exerces par la platine sur la pédale durant un tour sont dirigés successivement vers I'avant, vers le bas, vers l'arrière et vers le haut. Or, les efforts dirigés vers l'arrière, qui peuvent être relativement violents en certaines occasions (démarrages, montées « en danseuse » par exemple), agissent directement sur le levier d'ac- crochage dans le sens de son ouverture. En consé- quence ces efforts sont susceptibles de provoquer un dégagement intempestif de la chaussure par rapport a la pédale, ce qui est bien sur inacceptable sur les plans de la sécurité et de la performance.

L'invention vise a supprimer cet inconvenient.

A cet effet, le dispositif de fixation d'une chaussure sur une pédale de bicyclette objet de l'invention, comme la forme de realisation décrite plus haut, est constitué d'une platine fixée sous la semelle de la chaussure et d'une pédale pourvue de moyens d'ac- crochage adaptés pour maintenir la platine normale- ment appliquée sur la pédale, ces moyens d'accro- chage comprenant une griffe qui est montée mobile suivant la direction longitudinale de la bicyclette et est sollicitée vers I'avant par un organe élastique pour s'accrocher a la partie arrière de la platine, la griffe et la platine coopérant l'une avec I'autre par l'intermé- diaire de surfaces de commande en forme de V conformees de telle manière qu'une rotation de la platine dans son propre plan provoque le recul de la griffe mobile et permette l'échappement lateral de la chaussure. Conformement a I'invention la pédale est pourvue en outre de moyens d'appui fixes qui sont agencés pour absorber l'intégralité des efforts exerces vers l'arrière par la platine, tout en autorisant la rotation de la platine dans son propre plan et les moyens d'appui sont constitués d'une paire de bu- tees qui font saillie verticalement par rapport a la face supérieure de la pédale, de chaque côté de la griffe mobile, et sont adaptées pour coopérer avec des faces d'appui de forme complémentaire formées a l'arrière de la platine.

Grace a cet arrangement tout déclenchement intempestif de la chaussure vers l'arrière est exclu, la griffe d'accrochage mobile n'étant pas sollicitée dans ce sens au cours du pédalage normal.

Conformément a I'invention les moyens d'appui sont constitués selon une deuxième variante par un simple têton cylindrique vertical place a I'aplomb du centre de rotation de la platine et apte à se loger dans un trou de même diamètre menage dans la platine, ce trou ayant une ouverture évasée de manière a permettre le bascule- ment de la platine par rapport a la pédale lors de la mise en place et du dégagement de la chaussure.

Aussi conformément a I'invention les moyens d'appui sont constitués selon une troisième variante par un têton place en arrière du centre de rotation de la platine, ce têton logeant dans une lumière en arc de cercle formée sous la platine et centree sur ce centre de rotation.

Dans une forme de realisation privilégiée, qui est représentée sur les dessins, la pédale comporte une griffe d'accrochage avant fixe, apte a retenir la partie centrale de la face antérieure de la platine et servant de centre de rotation a cette dernière dans son propre plan, les surfaces d'appui des deux butées et des faces complémentaires de la platine étant des positions d'un cylindre centre sur la griffe d'accrochage avant de manière a guider la platine dans son mouvement de rotation.

Les moyens d'appui fixes sont avantageusement garnis d'un revêtement a faible coefficient de frottement pour faciliter la rotation de la platine consécuti- ve a un mouvement de torsion du pied.

Selon une autre caractéristique de l'invention, I'accrochage de platine sur la pédale par la griffe mobile est realise au moyen d'une zone d'appui qui est conformee et disposée de telle manière qu'un effort de traction de la platine vers le haut ne sollicite pas la griffe mobile dans le sens de son recul. On suppri- me ainsi le risque de déclenchement intempestif du dispositif par suite de tractions brusques du pied dans le sens vertical.

Selon une autre caractéristique de l'invention, la griffe mobile est constituée par un levier articulé autour d'un axe transversal. Pour raison de prix de revient de fabrication, cet axe est avantageusement un axe fictif realise par la cooperation d'un appendice bombe forme sur le levier avec un logement d'appui transversal forme dans la pédale.

Parailleurs la zone d'appui de la griffe mobile sur la platine est de preference une surface plane parallèle au plan de la platine, tandis que I'axe d'articulation de la griffe mobile est situé en dessous et sensiblement a I'aplomb de cette zone d'appui. On est ainsi assure qu'un effort de traction vertical exercé par la platine n'engendre pas sur la griffe un couple de basculement dans le sens de son ouverture.

D'autres particularités et avantages de l'invention seront mis en evidence grace a la description qui va maintenant en être faite en se référant aux dessins annexes qui représentent a titre d'exemple une forme de realisation du dispositif objet de l'invention.
la figure 1 est une vue de dessus de la platine seule ;
la figure 2 est une vue de face, coupée par le plan brisé II-II de la figure 1, de la platine fixée sous une semelle ;
la figure 3 est une vue de face coupée par son plan de symétrie longitudinal III-III (figure 4) de l'ensemble du dispositif, chaussure en place sur la pedale ;
la figure 4 est une vue de dessus de la platine en place sur la pédale (chaussure supposée enle- vee pour ne pas masquer la vue) ;
la figure 5 montre un detail de la pédale seule, vu suivant le plan de section V de la figure 4 ;
la figure 6 est une vue analogue a la figure 3 mon- trant un dégagement lateral de la chaussure ;
la figure 7 est une vue analogue a la figure 4 mon- trant ce même dégagement.

Le dispositif de fixation illustré est constitué d'une platine 1 en forme de plaque mince approxima- tivement rectangulaire et d'une pédale 2 traversée par un axe de rotation transversal 3 au moyen duquel elle est montée, de manière usuelle, sur la manivelle de pédalier (non représentée).

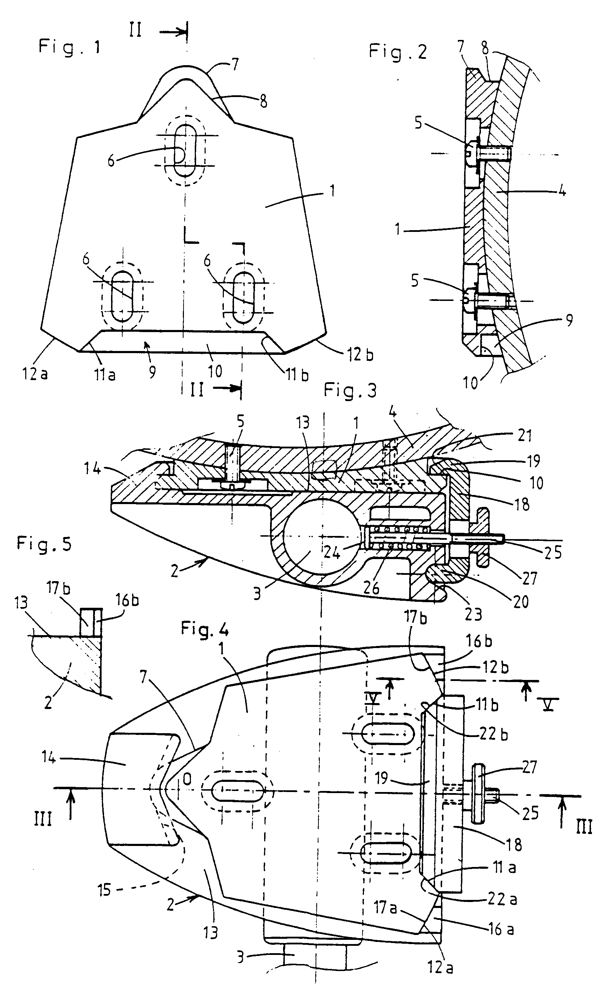

L'avant du pied est situé vers le haut sur les figures 1 et 2 et vers la gauche sur les figures 3 a 7.

La platine 1 est une piece en matière plastique ou en alliage léger de forme symétrique par rapport a un plan longitudinal vertical. Sa face inférieure est plane et sa face supérieure est légèrement concave, de manière a epouser sensiblement la partie 4 de la semelle de la chaussure située au niveau du métatar- se. Elle est fixée en cette zone de la semelle au moyen de trois vis 5 a tête noyée qui traversent des boutonnières 6 autorisant son ajustement dans le sens longitudinal.

La partie centrale avant de la platine 1 a la forme d'un bec arrondi 7 dont le dessus 8 se trouve en re- trait par rapport a son bord. Dans le bord arrière de la platine 1 est ménagée une encoche 9 transversale, de grande largeur. Le fond 10 de cette encoche est une surface plane parallèle a la face inférieure de la platine. L'encoche 9 ne débouche pas latéralement mais est délimitée sur chacun de ses côtés par une paroi verticale oblique 11a, 11 b. Ces parois forme un V dont la pointe est dirigée vers I'avant. De part et d'autre de I'encoche 9, le bord arrière de la platine 1 a la forme d'une portion de cylindre 12a, 12b, d'axe vertical centre sur le centre de courbure « O » du bec 7.

La pédale 2 possède une face supérieure 13 plane, dont les dimensions sont légèrement supérieures a celles de la platine 1. Elle est pourvue a sa partie centrale avant d'une griffe fixe 14 qui fait légèrement saillie au-dessus de la face 13 et présente une cuvette de retenue renfoncée concave 15 en forme de V ouvert vers l'arrière dont le fond arqué est complémentaire du bec 7 de la platine. Elle est pourvue, latéralement a sa partie arrière d'une paire de butées 16a, 16b qui font saillie au-dessus de la face 13 et dont les parois avant sont des portions cylindriques concaves 17a, 17b, complémentaires des portions 12a, 12b. Les butées 16a, 16b sont garnies d'un revêtement a faible coefficient de frottement par exem- pie en polytétrafluoréthylène.

A l'arrière de la pédale 2 est montée une griffe d'accrochage 18 en forme de levier de grande largeur, conformé de manière a présenter à sa partie supérieure un bec recourbé 19 tourné vers I'avant et a sa partie inférieure un appendice bombe 20 également tourné vers I'avant. On notera que le bord su- périeur du bec 19 presente un chanfrein 21 dont le rôle sera expliqué plus loin et deux parois latérales 22a, 22b complémentaires des parois 11a, 11b de I'encoche 9. Dans le bas de la face arrière de la pédale 2 est menage un logement transversal concave 23 adapté pour recevoir I'appendice 20 du levier 18.

La pédale 2 est percée en arrière de I'axe 3 d'un alésage 24 dispose longitudinalement. a la même hauteur que I'axe 3. Dans cet alésage peut coulisser une vis 25 dont la tête est sollicitée vers I'avant par un ressort de compression helicoidal 26 loge dans l'alésage 24. L'extrémité filetée de la vis 25 traverse des ouvertures appropriées ménagées dans la face arrière de la pédale 2 et dans la partie centrale du levier 18 pour faire saillie a l'arrière de ce dernier. Un écrou moleté 27 vissé sur cette partie filetée trans- met au levier 18 la sollicitation du ressort 26. lequel tend a le faire basculer vers I'avant autour d'un axe transversal fictif constitué par le centre de roulement de I'appendice 20 dans le logement 23. En vissant plus ou moins l'écrou 27 on peut faire varier le degré de compression du ressort 26 et par consequent I'in- tensité de cette sollicitation.

II faut noter que les masses de l'ensemble des pieces qui constituent la pédale 2 sont choisies et ré- parties de telle façon que la plaque supérieure 13 soit tournee vers le haut et légèrement inclinée par rapport a I'horizontale, la griffe fixe 14 se trouvant plus haut que la partie arrière portant la griffe mobile 18.

Le dispositif est utilisé et fonctionne de la manière suivante :

Pour chausser le dispositif, le cycliste présente son pied a peu près horizontalement et le déplace vers l'avant jusqu'à ce que le bec 7 vienne en appui contre la griffe 14 ; cette operation est très facile en raison de I'inclinaison naturelle initiale, due a la gra- vité, de la pédale. La poursuite du mouvementdu pied vers I'avant provoque le centrage de la platine dans I'axe longitudinal de la pédale (grace a la forme concave en V de la cuvette 15) et le relèvement de l'arrière de la pédale. Ensuite le cycliste effectue une légère pression du talon de sorte que le bord arrière (avantageusement chanfreiné) de la platine 1 agit sur le biseau 21 de la griffe 18 et ouvre celle-ci ; des que la platine 1 se trouve en appui contre la face supérieure 13 de la pédale, la griffe 18 se referme et le bec d'accrochage 19 se loge dans I'encoche 9.

Durant le pédalage normal, les efforts du pied sont transmis a la pédale par l'intermédiaire de la platine 1. Les forces dirigées vers I'avant sont absorbées par la griffe fixe 14. Les forces dirigées vers le bas sont absorbées par la face supérieure 13 de la pédale. Les forces dirigées vers l'arrière sont absorbées par les butées d'appui 16a, 16b. Les forces dirigées vers le haut sont absorbées par la griffe fixe avant 14 et par le bec 19 de la griffe mobile arrière 18. Comme la zone de contact 10 de la platine avec le bec 19 est horizontale et se trouve sensiblement a la verticale du centre de courbure de I'appendice 20, cette traction verticale n'engendre pas de couple d'ouverture sur le levier 18. On constate par consequent qu'aucun des efforts qui intervient au cours du pédalage normal ne risque de provoquer une ouverture intempes- tive du levier d'accrochage.

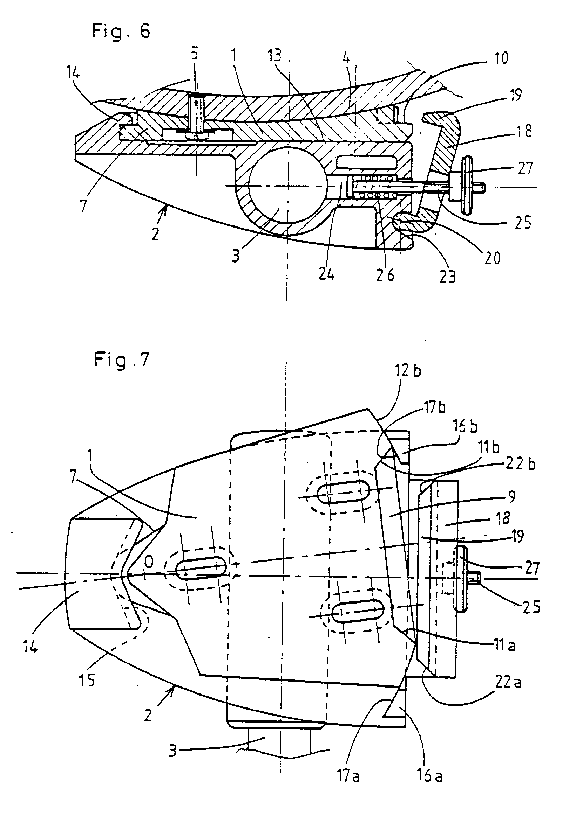

Le déchaussage s'opere par torsion du pied, soit volontairement lorsque le cycliste desire s'arrêter, soit au cours d'une chute lorsque des efforts latéraux anormaux se développent entre platine et pédale. Les figures 6 et 7 illustrent un déchaussage du pied vers l'extérieur.

Pour déchausser, le cycliste exerce une poussée du talon latéralement. La platine pivote alors dans son propre plan autour du point O, le bec 7 roulant au fond de la cuvette 15 de la griffe avant 14. Ce mouvement de rotation est guide par les butées latérales 16a, 16b dont les surfaces d'appui cylindriques 17a, 17b coopèrent avec les surfaces complémentaires 12a, 12b de la platine. Le matériau antifriction recou- vrant les surfaces 17a, 17b facilite ce mouvement.

La rotation de la platine est possible en raison de l'inclinaison de la paroi interne 11a de I'encoche 9. qui repousse par effet de coin la paroi associée 22a du levier 18. Ce dernier bascule vers l'arrière autour de son appendice bombe 20 en compri mant le ressort 26 par l'intermédiaire de la vis 25. Le bec d'accrochage 19 quitte I'encoche 9 de la platine qui est donc libre de s'echapper.

Dans une torsion vers l'intérieur le processus de déchaussage est identique; il est realise cette fois par cooperation des surfaces de commande externes 11 b-22b.

La force de retenue de la chaussure sur la pédale peut être adaptée a la force du cycliste, ou a son style de pédalage. par manoeuvre de l'écrou moleté 27.

On voit que le dispositif qui vient d'être décrit est extrêmement fiable et d'utilisation facile tout en étant très simple et peu coûteux.

Diverses variantes peuvent bien entendu être en- visagées, qui ne sortent pas du cadre de la présente invention.

C'est ainsi que les moyens d'appui destines a absorber les efforts de la platine vers l'arrière pourraient être constitués par un simple téton cylindrique vertical place a I'aplomb du centre de rotation de la platine et apte a se loger dans un trou de même diamètre menage dans la platine. Ce trou aurait une ouverture évasée de manière a permettre le basculement de la platine par rapport a la pédale lors de la mise en place et du dégagement de la chaussure.

On peut également envisager de prévoir un têton place en arrière du centre de rotation de la platine ; dans ce cas le téton viendrait se loger dans une lumière en arc de cercle formée sous la platine et centrée sur ce centre de rotation.

## Revendications

1. A device for fixing a shoe on a pedal of a bicycle and which is constituted by a plate (1) fixed under the sole (4) ofthe shoe and the pedal (2) provided with hooking means adapted to maintain the plate (1) normally applied to the pedal (2), said hooking means comprising a claw (18) which is mounted for movement in the longitudinal direction of the bicycle and is biased forwards by a resilient member (26) in order to hook onto the rear part (10) of the plate (1), the plate (1) and the claw (18) co-operating via control surfaces (11, 22) which are so shaped that a rotation of the plate (1) in its own plane causes a recoil of the movable claw (18) and allows lateral escape of the shoe, characterised in that the pedal (2) is provided with fixed bearing means (16) which are adapted to absorb all the stresses exerted rearwardly by the plate (1) while allowing rotation of the plate (1) in its own plane and in that the bearing means consist of a pair of abutments (16a, 16b) which project vertically in relation to the up- per surface (13) of the pedal (2) on each side of the movable claw (18) and are adapted to co-op- erate with bearing faces of matching form (12a, 12b) formed at the rear of the plate (1).

2. A device for fixing a shoe on a pedal of a bicycle, which is constituted by plate (1) f ixed under the sole (4) of the shoe and a pedal (2) provided with hooking means adapted to maintain the plate (1) normally applied to the pedal (2), said hooking means comprising a claw (18) which is mounted for movement in the longitudinal direction of the bicycle and which is biased forwards by a resilient member (26) in order to hook onto the rear part (10) of the plate (1), the plate (1) and the claw (18) co-operating via control surfaces (11, 22) which are so shaped that a rotation of the plate (1) in its own plane causes a recoil of the movable claw (18) and allows lateral escape of the shoe, characterised in that the pedal (2) is provided with fixed bearing means (16) which are adapted to absorb all the stresses exerted rearwardly by the plate (1) while allowing rotation of the plate (1) in its own plane and in that the bearing means are constituted by a single vertical cyl- indrical nipple placed flush with the centre of rotation of the plate and adapted to be accommo- dated in a hole of the same diameter provided in the plate, said hole having an opening which is flared in such a way as to allow tilting of the plate in relation to the pedal when the shoe is placed in position and removed.

3. A device for fixing a shoe on a pedal of a bicycle, which is constituted by a plate (1) fixed onto the sole (4) of the shoe and a pedal (2) provided with hooking means adapted to maintain the plate (1) normally applied against the pedal (2), said hooking means comprising a claw (18) mounted for movement in the longitudinal direction of the bicycle and biased forwards by a resilient member (26) in order to hook onto the rear part (10) of the plate (1), the plate (1) and the claw (18) co-operating via control surfaces (11, 22) which are so shaped that a rotation of the plate (1) in its own plane causes a recoil of the movable claw (18) and allow lateral escape of the shoe, characterised in that the pedal (2) is provided with fixed bearing means (16) which are adapted to absorb all the stresses exerted rearwardly by the plate (1) while allowing rotation of the plate (1) in its own plane and in that the bearing means are constituted by a nipple placed behind the centre of rotation of the plate, said nipple becoming ac- commodated in a port shaped like an arc of a cir- cle formed under the plate and centred on this centre of rotation.

4. A fixing device according to claim 1, characterised in that the pedal (2) comprises a fixed front hooking claw (14) adapted to retain the central part (7) of the front face of the plate (1) and serves this latter as a centre of rotation when it turns in its own plane, the bearing surfaces (17a, 17b) of the said abutments (16a, 16b) and of the matching bearing faces (12a, 12b) of the plate (1) being portions of a cylinder centred on the centre of curvature (O) of the front hooking claw (14).

5. A fixing device according to claim 1, characterised in that the fixed bearing means (16) are lined with a coating having a low coefficient offriction.

6. A fixing device according to one of the preceding claims, characterised in that hooking of the plate (1) on the pedal (2) by means of the movable hook (18) is accomplished via a contact zone (10) which is soshaped and disposed thatan upwards traction stress on the plate (1) does not exert on the movable claw (18) any stress in the direction of its recoil.

7. A fixing device according to one of the preceding claims, characterised in that the movable claw (18) consists of a lever provided with a hooking nose (19) and articulated about a transverse axis.

8. A fixing device according to claim 7, characterised in that the axis of articulation of the said lever (18) is an imaginary axis which is obtained by co-operation of a bulbous appendage (20) formed on the lever (18) with a concave transverse bearing housing (23) formed in the pedal.

9. A fixing device according to claims 6 and 7 or 6 and 8 taken in combination, characterised in that the bearing zone (10) ofthe movable claw (18) on the plate (1) is a flat surface parallel with the under side of the plate (1) and in that the axis of articulation of the movable claw (18) is situated be- low and substantially flush with this bearing zone (10).

## Claims

1. Dispositif de fixation d'une chaussure sur une pédale de bicyclette, qui est constitué d'une platine (1) fixée sous la semelle (4) de la chaussure et d'une pédale (2) pourvue de moyens d'accro- chage adaptés pour maintenir la platine (1) nor- malement appliquée sur la pédale (2), ces moyens d'accrochage comprenant une griffe (18) qui est montée mobile suivant la direction longitudinale de la bicyclette et est sollicitée vers I'avant par un organe élastique (26) pours'accro- cher a la partie arrière (10) de la platine (1), la platine (1) et la griffe (18) coopérant par l'inter- médiaire de surfaces de commande (11, 22) qui sont conformees de telle manière qu'une rotation de la platine (1) dans son propre plan provoque le recul de la griffe mobile (18) et permette l'échappement lateral de la chaussure, caractéri- se en ce que la pédale (2) est pourvue de moyens d'appui lixes (16) qui sont agencés pour absorber l'intégralité des ellorts exerces vers l'arrière par la platine (1) tout en autorisant la rotation de la platine (1) dans son propre plan et en ce que les moyens d'appui sont constitués d'une paire de butées (16a, 16b) qui font saillie verticalement par rapport a la face supérieure (13) de la pédale (2), de chaque côté de la griffe mobile (18), et sont adaptees pour cooperer avec des faces d'appui de lorme complémentaire (12a, 12b) formées a l'arrière de la platine (1).

2. Dispositif de fixation d'une chaussure sur une pédale de bicyclette, qui est constitué d'une platine (1) fixée sous la semelle (4) de la chaussure et d'une pédale (2) pourvue de moyens d'accro- chage adaptés pour maintenir la platine (1) nor- malement appliquée sur la pédale (2). ces moyens d'accrochage comprenant une griffe (18) qui est montée mobile suivant la direction longitudinale de la bicyclette et est sollicitée vers I'avant par un organe élastique (26) pours'accro- cher a la partie arrière (10) de la platine (1), la platine (1) et la griffe (18) coopérant par l'inter- médiaire de surfaces de commande (11, 22) qui sont conformees de telle manière qu'une rotation de la platine (1) dans son propre plan provoque le recul de la griffe mobile (18) et permette l'échappement lateral de la chaussure, caractéri- se en ce que la pédale (2) est pourvue de moyens d'appui lixes (16) qui sont agencés pour absorber l'intégralité des efforts exerces vers l'arrière par la platine (1) tout en autorisant la rotation de la platine (1) dans son propre plan et en ce que les moyens d'appui sont constitués par un simple têton cylindrique vertical place a I'aplomb du centre de rotation de la platine et apte a se loger dans un trou de même diamètre menage dans la platine, ce trou ayant une ouverture évasée de manière a permettre le basculement de la platine par rapport a la pédale lors de la mise en place et du dégagement de la chaussure.

3. Dispositif de fixation d'une chaussure sur une pédale de bicyclette, qui est constitué d'une platine (1) fixée sous la semelle (4) de la chaussure et d'une pédale (2) pourvue de moyens d'accro- chage adaptés pour maintenir la platine (1) nor- malement appliquée sur la pédale (2). ces moyens d'accrochage comprenant une griffe (18) qui est montée mobile suivant la direction longitudinale de la bicyclette et est sollicitée vers I'avant par un organe élastique (26) pour s'accro- cher a la partie arrière (10) de la platine (1), la platine (1) et la griffe (18) coopérant par l'inter- médiaire de surfaces de commande (11, 22) qui sont conformees de telle manière qu'une rotation de la platine (1) dans son propre plan provoque le recul de la griffe mobile (18) et permette l'échappement lateral de la chaussure, caractéri- se en ce que la pédale (2) est pourvue de moyens d'appui fixes (16) qui sont agencés pour absorber l'intégralité des efforts exercés vers l'arrière par la platine (1) tout en autorisant la rotation de la platine (1) dans son propre plan et en ce que les moyens d'appui sont constitués par un têton place en arrière du centre de rotation de la platine, ce têton se logeant dans une lumière en arc de cercle formée sous la platine et centrée sur ce centre de rotation.

4. Dispositif de fixation selon la revendication 1, caractérisé en ce que la pédale (2) comporte une griffe d'accrochage avant fixe (14) qui est apte a retenir la partie centrale (7) de la face antérieure de la platine (1) et sert de centre de rotation a cette dernière lorsqu'elle tourne dans son propre plan, les surfaces d'appui (17a, 17b) desdites bu- tees (16a, 16b) et des faces d'appui complémentaires (12a, 12b) de la platine (1) étant des portions d'un cylindre centre sur le centre de courbure (O) de la griffe d'accrochage avant (14).

5. Dispositif de fixation selon la revendication 1, caractérisé en ce que les moyens d'appui fixes (16) sont garnis d'un revêtement a faible coefficient de frottement.

6. Dispositif de fixation selon l'une des revendications précédentes caractérisé en ce que I'accro- chage de la platine (1) sur la pédale (2) au moyen de la griffe mobile (18) est realise par l'intermé- diaire d'une zone de contact (10) qui est confor- mée et disposée de telle manière qu'un effort de traction vers le haut de la platine (1) n'entraine sur la griffe mobile (18) aucune sollicitation dans le sens de son recul.

7. Dispositif de fixation selon l'une des revendications précédentes, caractérisé en ce que la griffe mobile (18) est constituée parun levier muni d'un bec d'accrochage (19) et articulé autour d'un axe transversal.

8. Dispositif de fixation selon la revendication 7, caractérisé en ce que I'axe d'articulation dudit levier (18) est un axe fictif qui est obtenu par la cooperation d'un appendice bombe (20) forme sur le levier (18) avec un logement d'appui transversal concave (23) forme dans la pedale.

9. Dispositif de fixation selon les revendications 6 et 7 ou 6 et 8 prises en combinaison, caractérisé en ce que la zone d'appui (10) de la griffe mobile (18) sur la platine (1) est une surface plane parallèle a la face inferieure de la platine (1) et que I'axe d'articulation de la griffe mobile (18) est si- tue en dessous et sensiblement a I'aplomb de cette zone d'appui (10).

## Patentansprüche

1. Vorrichtung zur Befestigung eines Schuhs an einem Fahrradpedal bestehend aus einer unter der Sohle (4) des Schuhs befestigten Platine (1) und einem Pedal (2) mit Verhakungsmitteln zur Halterung der Platine (1), wenn diese normal an dem Pedal (2) angebracht wird, wobei die Verhakungsmittel eine Klaue (18) umfassen, die in Längsrichtung des Fahrrads beweglich montiert und durch ein elastisches Organ (26) derart nach vorn vorgespannt ist, daß sie sich an dem hinteren Teil (10) der Platine (1) verhakt, und wobei die Platine (1) und die Klaue (18) über Steuerflächen (11, 22) zusammenwirken, die derart ausgebildet sind, daß eine Drehung der Platine (1) in ihrer eigenen Ebene ein Zurückstoßen der beweglichen Klaue (18) hervorruft und ein seitliches Heraustreten des Schuhs ermöglicht, dadurch gekennzeichnet, daß das Pedal (2) mit festen Abstützmitteln (16) ausgestattet ist, die derart angeordnet sind, daß sie die gesamten von der Platine (1) nach hinten ausgeübten Kräfte aufnehmen, dabei jedoch eine Drehung der Platine (1) in ihrer eigenen Ebene ermöglichen, und daß die Abstützmittel von zwei Anschlägen (16a, 16b) gebildet sind, die aus der Oberseite (13) des Pedals (2) zu beiden Seiten der beweglichen Klaue (18) nach oben vorstehen und derart ausgebildet sind, daß sie mit komplementär geformten Stützflächen (12a, 12b) zusammenwirken, die an der Rückseite der Platine (1) ausgebildet sind.

2. Vorrichtung zur Befestigung eines Schuhs an einem Fahrradpedal, bestehend aus einer unter der Sohle (4) des Schuhs befestigten Platine (1) und einem Pedal (2) mit Verhakungsmitteln zur Halterung der Platine (1), wenn diese normal an dem Pedal (2) angebracht wird, wobei die Verhakungsmittel eine Klaue (18) umfassen, die in Längsrichtung des Fahrrads beweglich montiert und durch ein elastisches Organ (26) derart nach vorn vorgespannt ist, daß sie sich an dem hinteren Teil (10) der Platine verhakt, und wobei die Platine (1) und die Klaue (18) über Steuerflächen (11,22) zusammenwirken, die derart ausgebi Idet sind, daß eine Drehung der Platine (1) in ihrereigenen Ebene ein Zurückstoßen der beweglichen Klaue (18) hervorruft und ein seitliches Heraustreten des Schuhs ermöglicht, dadurch gekennzeichnet, daß das Pedal (2) mit festen Abstützmitteln (16) ausgestattet ist, die derart angeordnet sind, daß sie die gesamten von der Platine (1) nach hinten ausgeübten Kräfte aufnehmen, dabei jedoch eine Drehung der Platine (1) in ihrereigenen Ebene ermöglichen und daß die Abstützmittel aus einem einfachen vertikalen zylindrischen Ansatz gebildet sind, der senkrecht im Rotationszentrum der Platine angeordnet ist und von einem durchmessergleichen Loch in der Platine aufgenommen werden kann, wobei dieses Loch eine ausgeweitete Öffnung besitzt, die beim Einsetzen oder beim Herausnehmen des Schuhs ein Verschwenken der Platine gegenüber dem Pedal ermöglicht.

3. Vorrichtung zur Befestigung eines Schuhs an einem Fahrradpedal, bestehend aus einer unter der Sohle (4) des Schuhs befestigten Platine (1) und einem Pedal (2) mit Verhakungsmitteln zur Halterung der Platine (1), wenn diese normal an dem Pedal (2) angebracht wird, wobei die Verhakungsmittel eine Klaue (18) umfassen, die in Längsrichtung des Fahrrads beweglich montiert und durch ein elastisches Organ (26) derart nach vorn vorgespannt ist, daß sie sich an dem hinteren Teil (10) der Platine (1) verhakt, und wobei die Platine (1) und die Klaue (18) über Steuerflächen (11, 22) zusammenwirken, die derart ausgebildet sind, daß eine Drehung der Platine (1) in ihrer eigenen Ebene ein Zurückstoßen der beweglichen Klaue (18) hervorruft und ein seitliches Heraustreten des Schuhs ermöglicht, dadurch gekennzeichnet, daß das Pedal (2) mit festen Abstützmitteln (16) ausgestattet ist, die derart angeordnet sind, daß sie die gesamten von der Platine (1) nach hinten ausgeübten Kräfte aufnehmen, dabei jedoch eine Drehung der Platine (1) in ihrer eigene Ebene ermöglichen, und daß die Abstützmittel aus einem hinter dem Rotationszentrum der Platine angeordneten Ansatz bestehen, der in einer kreisbogenförmigen Öffnung aufgenommen ist, die unter der Platine ausgebildet und in diesem Rotationszentrum zentriert ist.

4. Befestigungsvorrichtung nach Anspruch 2, dadurch gekennzeichnet, daß an dem Pedal (2) eine vordere feste Verhakungsklaue (14) vorgesehen ist, die zur Halterung des zentralen Teils (7) der Vorderseite der Platine (1) dient und das Rotationszentrum der Platine bildet, wenn diese in ihrer eigenen Ebene gedreht wird, und daß die Stützflächen (1 7a, 17b) derAnschläge (16a, 16b) und die komplementären Stützflächen (12a, 12b) der Platine (1) von Abschnitten eines Zylinders gebildet sind, der in dem Krümmungszentrum (0) der vorderen Verhakungsklaue (14) zentriert ist.

5. Befestigungsvorrichtung nach Anspruch 1, dadurch gekennzeichnet, daß die festen Abstützmittel (16) mit einem Überzug aus reibungsarmem Material versehen sind.

6. Befestigungsvorrichtung nach einem der vorhergehenden Ansprüche, dadurch gekennzeichnet, daß die Verhakung der Platine (1) an dem Pedal (2) mit Hilfe der beweglichen Klaue (18) über eine Kontaktzone (10) erfolgt, die derart geformt und angeordnet ist, daß eine nach oben gerichtete Zugkraft der Platine (1) auf die bewegliche Klaue (18) keinerlei Beanspruchung in Öffnungsrichtung ausübt.

7. Befestigungsvorrichtung nach einem der vorhergehenden Ansprüche, dadurch gekennzeichnet, daß die bewegliche Klaue (18) von einem mit einer Verhakungsnase (19) ausgestatteten Hebel gebildet ist, der um eine transversale Achse drehbar ist.

8. Befestigungsvorrichtung nach Anspruch 7, dadurch gekennzeichnet, daß die Drehachse des genannten Hebels (18) eine fiktive Achse ist, die durch das Zusammenwirken eines an dem Hebel (18) ausgebildeten gewölbten Ansatzes (20) mit einem an dem Pedal (2) ausgebildeten konkaven, transversalen Stützsitz (23) realisiert ist.

9. Befestigungsvorrichtung nach den Kombinationen der Ansprüche 6 und 7 oder6 und 8, dadurch gekennzeichnet, daß die an der Platine (1) ausgebildete Kontaktzone (10) für die bewegliche Klaue (18) eine ebene Fläche ist, die parallel zur Unterseite der Platine (1) verläuft, und daß die Drehachse der beweglichen Klaue (18) unter und zumindest annähernd auf der Lotrechten dieser Kontaktzone (10) liegt.
